# EUROPEAN PATENT APPLICATION

(11) **EP 1 653 672 A1**
(43) Date of publication of application: **03.05.2006**
(21) Application number: 05109856.4
(22) Date of filing: 21.10.2005
(51) Int. Cl.: H04L 12/28, H01Q 1/24

(54) **Information processing apparatus and communication control method for reducing interference between WLAN and bluetooth.**

(30) Priority: 29.10.2004 JP 2004316723
(71) Applicant: KABUSHIKI KAISHA TOSHIBA, Tokyo 105-8001 (JP)
(72) Inventor: Hirota, Toshiyuki, 105-8001, Tokyo (JP); Kaji, Koichi, 105-8001, Tokyo (JP)
(74) Representative: Henkel, Feiler & Hänzel

(57) **Abstract**

An information processing apparatus includes an antenna (5) corresponding to a first wireless communication scheme, a first wireless communication unit (120) which executes wireless communication by the first wireless communication scheme using the antenna (5) corresponding to the first wireless communication scheme, a plurality of antennas (1, 2, 3) corresponding to a second wireless communication scheme, a second wireless communication unit (123) which executes wireless communication by a second wireless communication scheme using the plurality of antennas (1, 2 ,3) corresponding to the second wireless communication scheme; and a unit (201) for executing processing of stopping use of the plurality of antennas (1, 2, 3) corresponding to the second wireless communication scheme, when the first wireless communication unit (120) and the second wireless communication unit (123) are operating, in accordance with isolation levels between the antenna (5) corresponding to the first wireless communication scheme and the plurality of antennas (1, 2, 3) corresponding to the second wireless communication scheme, in ascending order of the isolation level.

## Description

The present invention relates to an information processing apparatus such as a personal computer and, more particularly, to an information processing apparatus which supports a plurality of types of wireless communication scheme and a communication control method used in the apparatus.

Recently, there has been developed a personal computer equipped with both a wireless communication device complying with the Institute of Electrical and Electronics Engineers (IEEE) 802.11 standard and a wireless communication device complying with the Bluetooth standard.

These wireless communication devices use the 2.4-GHz Industrial, Scientific and Medical (ISM) band. For this reason, when a wireless local area network and Bluetooth (R) are used at the same time, radio interference causes a considerable decrease in communication speed.

According to Bluetooth Version 1.2, the adaptive frequency hopping (AFH) technique is used to reduce radio interference. The AFH technique is a technique of performing frequency hopping while avoiding the channel used by a wireless LAN. Even the use of the AFH technique, however, cannot completely eliminate interference. In addition, the effect of the use of the AFH technique varies depending on the isolation level between a wireless LAN antenna and a Bluetooth antenna. It is generally recommended that the isolation level between a wireless LAN antenna and a Bluetooth antenna be maintained at 40 dB.

However, an isolation level of 40 dB corresponds to about 1 meters of spatial separation, and hence it is practically difficult to ensure an isolation level of 40 dB in a personal computer.

Jpn. Pat. Appln. KOKAI Publication No. 2004-32462 discloses a technique of simply limiting the number of antennas used by a wireless LAN to one in order to prevent interference between the wireless LAN and Bluetooth.

In general, however, as the number of antennas used increases, the wireless communication performance improves. If, therefore, the number of antennas used is simply limited to one, the wireless communication performance deteriorates.

Under the circumstances, it has been required to provide an information processing apparatus and its communication control method which can efficiently reduce radio interference while maintaining the use of as many antennas as possible.

An object of the present invention is to provide an information processing apparatus and its communication control method which can efficiently reduce radio interference while maintaining the use of as many antennas as possible.

According to an embodiment of the present invention, there is provided an information processing apparatus comprising, an antenna corresponding to a first wireless communication scheme, a first wireless communication unit which executes wireless communication by the first wireless communication scheme using the antenna corresponding to the first wireless communication scheme, a plurality of antennas corresponding to a second wireless communication scheme, a second wireless communication unit which executes wireless communication by a second wireless communication scheme using the plurality of antennas corresponding to the second wireless communication scheme, and means for executing processing of stopping use of the plurality of antennas corresponding to the second wireless communication scheme, when the first wireless communication unit and the second wireless communication unit are operating, in accordance with isolation levels between the antenna corresponding to the first wireless communication scheme and the plurality of antennas corresponding to the second wireless communication scheme, in ascending order of the isolation level, until signal interference caused between wireless communication executed by the first wireless communication scheme and wireless communication executed by the second wireless communication scheme is reduced to a predetermined level.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the outer appearance of an information processing apparatus according to an embodiment of the present invention;
FIG. 2 is a block diagram showing the system arrangement of the information processing apparatus according to the embodiment;
FIG. 3 is a block diagram showing the arrangement of a wireless LAN module provided for the information processing apparatus according to the embodiment;
FIG. 4 is a view showing an example of the arrangement of antenna control information used by the information processing apparatus according to the embodiment;
FIG. 5 is a view showing an example of how the antenna control information in FIG. 4 is stored in a BIOS-ROM provided in the information processing apparatus according to the embodiment;
FIG. 6 is a flowchart showing the first example of antenna control processing executed by the information processing apparatus according to the embodiment;
FIG. 7 is a flowchart showing an example of antenna use resumption processing executed by the information processing apparatus according to the embodiment; and
FIG. 8 is a flowchart showing the second example of antenna control processing executed by the information processing apparatus according to the embodiment.

Embodiments of the present invention will be described below with reference to the views of the accompanying drawing.

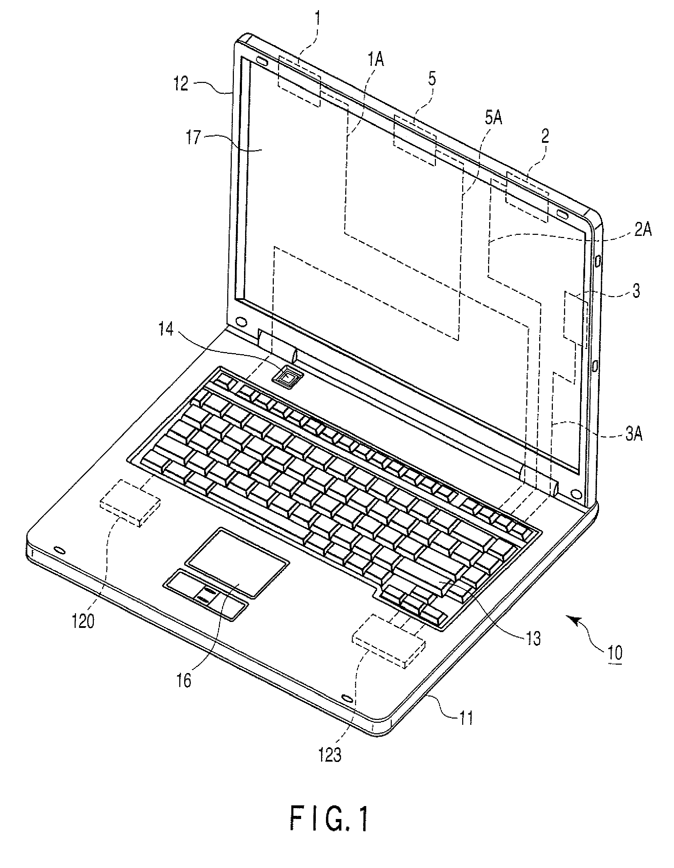

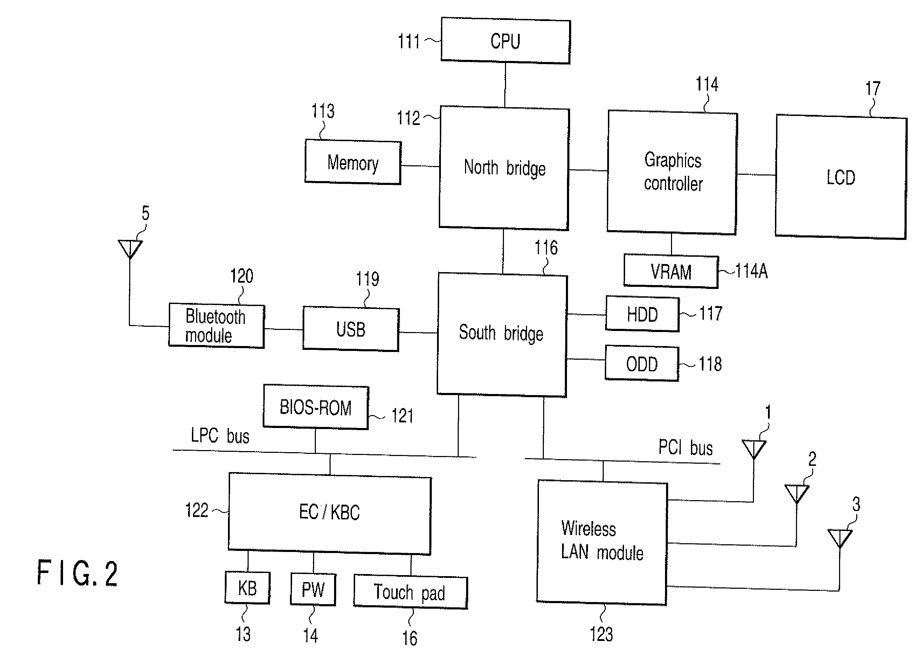

The arrangement of an information processing apparatus according to an embodiment of the present invention will be described first with reference to FIGS. 1 and 2. This information processing apparatus is realized as, for example, a notebook personal computer 10.

FIG. 1 is a front view of the notebook personal computer 10 with the display unit open. The computer 10 includes a computer body 11 and display unit 12. A display device formed from a liquid crystal display (LCD) 17 is built in the display unit 12. The display screen of the LCD 17 is placed almost in the center of the display unit 12.

The display unit 12 is mounted on the computer body 11 so as to be pivotal between the open and closed positions. The computer body 11 has a thin box-like housing. A keyboard 13, a power button 14 for powering on/off the computer 10, a touch pad 16, and the like are arranged on the upper surface of the computer body 11. The computer body 11 incorporates a Bluetooth module 120 functioning as the first wireless communication unit, and a wireless LAN module 123 functioning as the second wireless communication unit.

Both the Bluetooth module (BT module) 120 and the wireless LAN module 123 use the 2.4-GHz frequency band.

The Bluetooth module 120 is a wireless communication unit which executes wireless communication complying with, for example, the Bluetooth Version 1.2 standard. An antenna 5 of the Bluetooth module 120 is placed in an upper portion of the housing of the display unit 12. The Bluetooth module 120 is connected to the antenna 5 through an antenna cable 5A. The Bluetooth module 120 executes wireless communication with an external Bluetooth device by using the antenna 5. The antenna 5 will be referred to as the BT antenna 5 below.

The wireless LAN module 123 is a wireless communication unit which executes wireless communication complying with, for example, the IEEE 802.11 standard. The wireless LAN module 123 executes wireless communication with an external wireless LAN device by using a plurality of antennas 1, 2, and 3. The wireless LAN module 123 executes wireless communication by a diversity system using the antennas 1, 2, and 3. In this case, during signal reception, the wireless LAN module 123 selects one of the antennas 1, 2, and 3 which has the highest reception signal level. When performing transmission, the wireless LAN module 123 transmits a radio signal by using the antenna selected in the previous signal reception.

The antennas 1, 2, and 3 are arranged at different positions on the housing of the display unit 12. For example, the antenna 1 is placed on the left end of the upper portion of the housing of the display unit 12. The antenna 2 is placed on the right end of the upper portion of the housing of the display unit 12. The antenna 3 is placed on a portion on the right side of the housing of the display unit 12.

In the diversity system, the distances between the respective antennas are preferably set to 3/4 λ or more. In this embodiment, therefore, the positions of the antennas 1, 2, and 3 are determined such that they are spaced apart from each other by 3/4λ or more.

The antennas 1, 2, and 3 are connected to the wireless LAN module 123 through antenna cables 1A, 2A, and 3A, respectively. The antennas 1, 2, and 3 will be respectively referred to as the wireless LAN antennas 1, 2, and 3 hereinafter.

The system arrangement of the computer 10 will be described next with reference to FIG. 2.

As shown in FIG. 2, the computer 10 includes a CPU 111, a north bridge 112, a main memory 113, a graphics controller 114, the LCD 17, a south bridge 116, an hard disk drive (HDD) 117, an optical disk drive (ODD) 118, a universal serial bus (USB) controller 119, the Bluetooth module 120, a BIOS-ROM 121, an embedded controller/keyboard controller IC (EC/KBC) 122, the wireless LAN module 123, and the like.

The CPU 111 is a processor provided to control the operation of the computer 10, and executes each program loaded from the HDD 117 into the main memory 113. The CPU 111 also executes a system basic input-output system (BIOS) stored in the BIOS-ROM 121. The system BIOS is a program for hardware control.

The north bridge 112 is a bridge device which connects the local bus of the CPU 111 to the south bridge 116. The north bridge 112 also has a function of executing communication with the graphics controller 114 through an accelerated graphics port (AGP) bus and the like.

The graphics controller 114 is a display controller which controls the LCD 17 used as the display monitor of the computer 10. The graphics controller 114 generates a display signal to be sent out to the LCD 17 from the video data written in a VRAM (video memory) 114A. The south bridge 116 controls each device on a low pin count (LPC) bus and each device on a peripheral component interconnect (PCI) bus. The south bridge 116 has a function of controlling the HDD 117 and ODD 118 and a function for performing access control on the USB controller 119.

The south bridge 116 incorporates an IDE (Integrated Drive Electronics) controller for controlling the HDD 117 and ODD 118.

The HDD 117 is a storage unit which stores various kinds of software and data. The ODD 118 is a drive unit for driving storage media such as a DVD and CD.

The USB controller 119 is a bus interface which connects the computer 10 to a peripheral device complying with the USB standard. The Bluetooth module 120 is connected to the USB controller 119.

The embedded controller/keyboard controller IC (EC/KBC) 122 is a single-chip microcomputer into which an embedded controller for power management and a keyboard controller for controlling the keyboard (KB) 13, power button 14, and touch pad 16 are integrated.

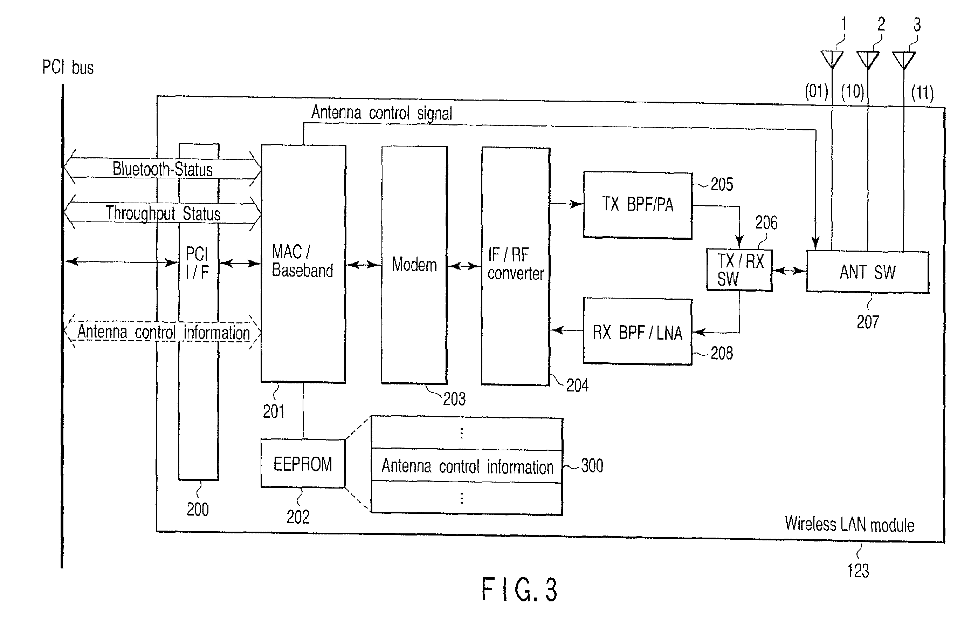

The arrangement of the wireless LAN module 123 will be described next with reference to FIG. 3.

The wireless LAN module 123 is connected to a PCI bus through a PCI interface 200. The wireless LAN module 123 includes a baseband processing unit (MAC/Baseband) 201, an EEPROM 202, a Modem 203, an intermediate frequency (IF)/radio frequency (RF) converter (IF/RF converter) 204, a transmission unit (TX-BPF/PA) 205 including a bandpass filter (BPF) and power amplifier (PA), a transmission/reception switch (TX/RX SW) 206, an antenna switch (ANT SW) 207, and a reception unit (RX-BPF/LNA) 208 including a low noise amplifier (LNA) and bandpass filter (BPF).

Antenna control information 300 is stored in the EEPROM 202. The antenna control information 300 is control information indicating the ranks of the wireless LAN antennas 1, 2, and 3 which are associated with the isolation levels between the BT antenna 5 and the wireless LAN antennas 1, 2, and 3. The wireless LAN antennas 1, 2, and 3 are ranked in advance based on the isolation levels between the BT antenna 5 and the wireless LAN antennas 1, 2, and 3. The isolation levels between the BT antenna 5 and the wireless LAN antennas 1, 2, and 3 are greatly influenced by the presence/absence of a metal member and insulating member existing near the respective wireless LAN antennas 1, 2, and 3 as well as the distances between the BT antenna 5 and the wireless LAN antennas 1, 2, and 3. In this embodiment, the isolation levels between the BT antenna 5 and the wireless LAN antennas 1, 2, and 3 are determined by actually measuring isolation levels using a network analyzer or the like at the time of manufacture of the computer 10. The wireless LAN antennas 1, 2, and 3 are ranked based on the isolation levels between the BT antenna 5 and the wireless LAN antennas 1, 2, and 3 which are determined by measurement. For example, a wireless LAN antenna exhibiting the lowest isolation level is ranked lowest, and a wireless LAN antenna exhibiting the highest isolation level is ranked highest.

The baseband processing unit (MAC/Baseband) 201 executes antenna control processing that sequentially stopping the use of the wireless LAN antennas 1, 2, and 3 in order with low the of isolation level based on antenna control information 300. Upon receiving a BT-Status signal indicating that the Bluetooth module 120 is powered on, i.e., both the wireless LAN module 123 and the Bluetooth module 120 are operated, the baseband processing unit (MAC/Baseband) 201 executes antenna control processing.

In antenna control processing, the baseband processing unit (MAC/Baseband) 201 designates a wireless LAN antenna whose use should be stopped with respect to the antenna switch (ANT SW) 207. An antenna control signal is also used as a signal for selecting a transmission antenna/reception antenna to realize the diversity system.

In addition, antenna control processing may be executed under the condition that the throughput (effective communication speed) of wireless communication executed by the wireless LAN module 123 or the throughput (effective communication speed) of wireless communication executed by the Bluetooth module 120 has decreased below a predetermined value. The throughput of the wireless LAN module 123 is detected by the baseband processing unit (MAC/Baseband) 201. The throughput of the Bluetooth module 120 is detected by a Bluetooth driver as software which controls the Bluetooth module 120. The baseband processing unit (MAC/Baseband) 201 is notified with the detected throughput of the Bluetooth module 120 using a throughput Status signal.

The baseband processing unit (MAC/Baseband) 201 modulates a transmission signal into an I/Q (In-phase/Quadrature-phase) signal and sends out the resultant signal to the Modem 203. The baseband processing unit (MAC/Baseband) 201 also has a function of demodulating an I/Q signal received from the Modem 203.

The Modem 203 modulates an I/Q signal from the baseband processing unit (MAC/Baseband) 201 and sends out the resultant signal to the IF/RF converter 204. The Modem 203 has a function of demodulating an IF signal received from the IF/RF converter 204 into an I/Q signal.

The IF/RF converter 204 converts the IF signal transmitted from the Modem 203 into an RF signal, and sends it out to the TX-BPF/PA 205. The IF/RF converter 204 has a function of demodulating the RF signal received from the RX-BPF/LNA 208 into an IF signal.

The TX-BPF/PA 205 has a function of transmitting the RF signal, transmitted from the IF/RF converter 204, to the ANT SW 207 through the TX/RX SW 206.

The TX/RX SW 206 has a function of transmitting the RF signal from the TX-BPF/PA 205 to the ANT SW 207, and a function of sending out the RF signal, received from the ANT SW 207, to the RX-BPF/LNA 208.

The ANT SW 207 has a function of stopping the use of one of the wireless LAN antennas 1, 2, and 3 which is designated by an antenna control signal, and a function of transmitting/receiving an RF signal by using the antenna designated by the antenna control signal.

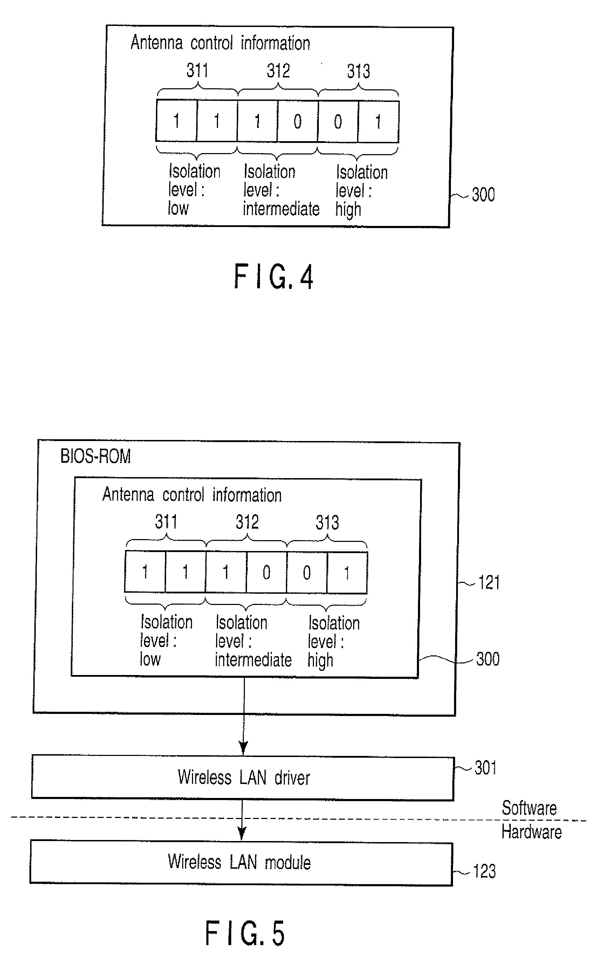

The arrangement of the antenna control information 300 will be described next with reference to FIGS. 4 and 5. As shown in FIG. 4, the antenna control information 300 includes control information indicating the ranks of the wireless LAN antennas 1, 2, and 3. The antenna control information 300 includes three data portions 311, 312, and 313 each indicating an antenna number. The data portion 311 indicates an antenna number corresponding to the lowest isolation level. The data portion 312 indicates an antenna number corresponding to the second lowest isolation level. The data portion 313 indicates an antenna number corresponding to the highest isolation level. Assume that the wireless LAN antenna 3 (antenna number = 3) exhibits the lowest isolation level, the wireless LAN antenna 2 (antenna number = 2) exhibits the second lowest isolation level, and the wireless LAN antenna 1 (antenna number = 1) exhibits the highest isolation level. In this case, the data portion 311 is 2-bit data "11" indicating antenna number = 3, the data portion 312 is 2-bit data "10" indicating antenna number = 2, and the data portion 313 is 2-bit data "01" indicating antenna number = 1.

The baseband processing unit (MAC/Baseband) 201 executes antenna control processing by referring to the antenna control information 300 in the EEPROM 202. The antenna whose use is stopped first is the wireless LAN antenna 3 designated by the data portion 311. When the use of the antenna 3 is stopped, the baseband processing unit (MAC/Baseband) 201 executes wireless communication in the diversity system by using the wireless LAN antennas 1 and 2. The antenna whose use is stopped following the wireless LAN antenna 3 is the wireless LAN antenna 2. When the use of the antenna 2 is stopped, the baseband processing unit (MAC/Baseband) 201 executes wireless communication by using only the wireless LAN antenna 1.

As shown in FIG. 5, the antenna control information 300 may be stored in the BIOS-ROM 121 in advance. The antenna control information 300 stored in the BIOS-ROM 121 is written in the EEPROM 202 by a wireless LAN driver 301 when, for example, the wireless LAN module 123 is initialized. The wireless LAN driver 301 is software for controlling the wireless LAN module 123. The wireless LAN driver 301 also has a function of instructing the baseband processing unit (MAC/Baseband) 201 of the wireless LAN module 123 to execute wireless communication by using one of communication schemes defined by IEEE 802.11a, IEEE 802.11b, and IEEE 802.11g.

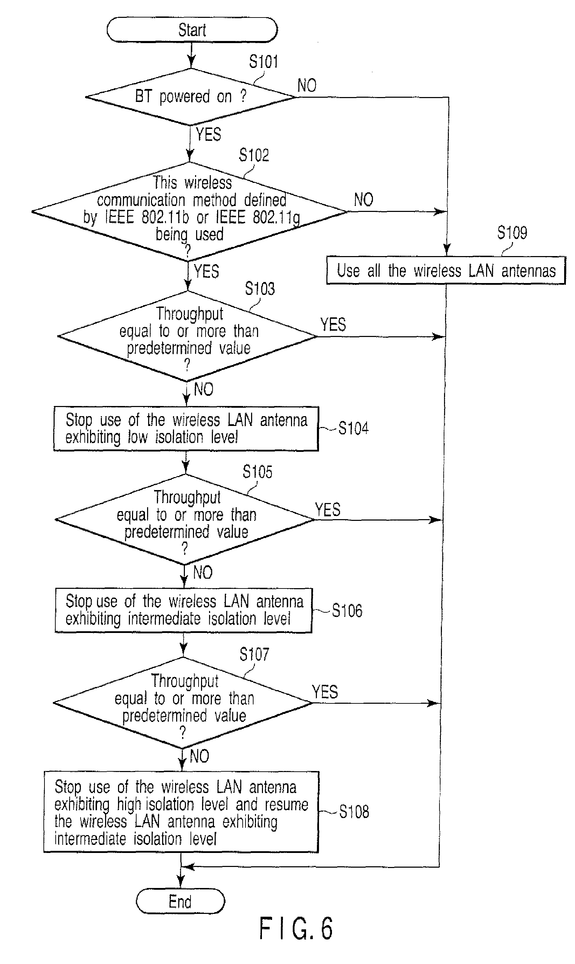

The first example of an antenna control processing sequence executed by the baseband processing unit (MAC/Baseband) 201 of the wireless LAN module 123 will be described next with reference to the flowchart of FIG. 6.

Assume that the wireless LAN module 123 has already been powered on, and the wireless LAN module 123 is executing wireless communication by using the wireless LAN antennas 1, 2, and 3.

First of all, the baseband processing unit (MAC/Baseband) 201 determines, by using a BT Status signal, whether or not the Bluetooth module (BT) 120 is powered on (step S101).

If the Bluetooth module (BT) 120 is in the OFF state, the baseband processing unit (MAC/Baseband) 201 continuously uses all the wireless LAN antennas, i.e., the wireless LAN antennas 1, 2, and 3 (step S109).

When the Bluetooth module (BT) 120 is powered on, i.e., both the Bluetooth module (BT) 120 and the wireless LAN module 123 are operating (YES in step S101), the baseband processing unit (MAC/Baseband) 201 determines whether or not the wireless communication scheme defined by IEEE 802.11b or IEEE 802.11g is currently being used (step S102). If the wireless communication scheme used by the wireless LAN module 123 is that defined by IEEE 802.11a (NO in step S102), no radio interference occurs between the Bluetooth module (BT) 120 and the wireless LAN module 123. The baseband processing unit (MAC/Baseband) 201 therefore continuously uses all the wireless LAN antennas (wireless LAN antennas 1, 2, and 3) (step S109). If the wireless communication method defined by IEEE 802.11a is used (NO in step S102), the baseband processing unit (MAC/Baseband) 201 continuously uses all the wireless LAN antennas (wireless LAN antennas 1, 2, and 3) (step S109) .

If the wireless communication scheme defined by IEEE 802.11b or IEEE 802.11g is being used (YES in step S102), the baseband processing unit (MAC/Baseband) 201 detects the current throughput of wireless communication executed by the wireless LAN module 123, and determines whether or not the detected throughput is equal to or more than a predetermined value (step S103).

If the current throughput of the wireless LAN module 123 is lower than the predetermined value (NO in step S103), the baseband processing unit (MAC/Baseband) 201 starts antenna control processing. If the current throughput of the wireless LAN module 123 is equal to or more than the predetermined value (YES in step S103), antenna control processing is not executed.

In antenna control processing, first of all, the baseband processing unit (MAC/Baseband) 201 stops the use of one of the wireless LAN antennas 1, 2, and 3 which exhibits the lowest isolation level of those between the wireless LAN antennas 1, 2, and 3 and the BT antenna 5 (step S104). In step S104, the baseband processing unit (MAC/Baseband) 201 refers to the antenna control information 300 and stops the use of the wireless LAN antenna (the wireless LAN antenna 3 in this case) of the antenna number designated by the data portion 311. As a consequence, the currently used wireless LAN antennas are two antennas, i.e., the antennas 1 and 2. The wireless LAN module 123 executes wireless communication by using the two antennas 1 and 2.

The baseband processing unit (MAC/Baseband) 201 detects the throughput of wireless communication currently executed by the wireless LAN module 123 to determine whether or not the signal interference level between the wireless LAN module 123 and the Bluetooth module (BT) 120, i.e., the signal interference level between wireless communication (radio waves) corresponding to the wireless LAN module 123 and wireless communication (radio waves) corresponding to the Bluetooth module (BT) 120, has been reduced to a predetermined level (step S105).

If the current throughput of the wireless LAN module 123 is equal to or more than the predetermined value (YES in step S105), i.e., the signal interference level is reduced to the predetermined level, the baseband processing unit (MAC/Baseband) 201 terminates the antenna control processing. Subsequently, the wireless LAN module 123 executes wireless communication by using the two antennas 1 and 2.

If the current throughput is lower than the predetermined value (NO in step S105), i.e., the signal interference level is not reduced to the predetermined level, the baseband processing unit (MAC/Baseband) 201 stops the use of one of the wireless LAN antennas 1, 2, and 3 which exhibits the second lowest isolation level of those between the BT antenna 5 and the wireless LAN antennas 1, 2, and 3 (step S106). In step S106, the baseband processing unit (MAC/Baseband) 201 refers to the antenna control information 300 and stops the use of the wireless LAN antenna (the wireless LAN antenna 2 in this case) of the antenna number designated by the data portion 312. As a consequence, only the antenna 1 is currently used as a wireless LAN antenna. The wireless LAN module 123 executes wireless communication by using only the antenna 1.

The baseband processing unit (MAC/Baseband) 201 detects the throughput of wireless communication currently executed by the wireless LAN module 123 again and determines whether or not the detected throughput is equal to or more than a predetermined value, in order to determine whether or not the signal interference level between the wireless LAN module 123 and the Bluetooth module (BT) 120 is reduced to a predetermined level (step S107). If the current throughput of the wireless LAN module 123 is equal to or more than the predetermined value (YES in step S107), i.e., the signal interference level is reduced to the predetermined level, the baseband processing unit (MAC/Baseband) 201 terminates the antenna control processing. Subsequently, the wireless LAN module 123 executes wireless communication by using only the wireless LAN antenna 1.

If the current throughput is lower than the predetermined value (NO in step S107), the baseband processing unit (MAC/Baseband) 201 determines that the wireless LAN antenna 1 exists near the null point of the electric field strength level. The baseband processing unit (MAC/Baseband) 201 then stops the use of the wireless LAN antenna 1, and resumes the use of the wireless LAN antenna 2 exhibiting the second highest isolation level (step S108). Subsequently, the wireless LAN module 123 executes wireless communication by using only the wireless LAN antenna 2. It is expected that the electric field strength level of radio waves received by the wireless LAN antenna 2 is higher than that of radio waves received by the wireless LAN antenna 1. The isolation level of the wireless LAN antenna 2 is the highest next to that of the wireless LAN antenna 1. Therefore, the throughput can be improved by using the wireless LAN antenna 2 instead of the wireless LAN antenna 1.

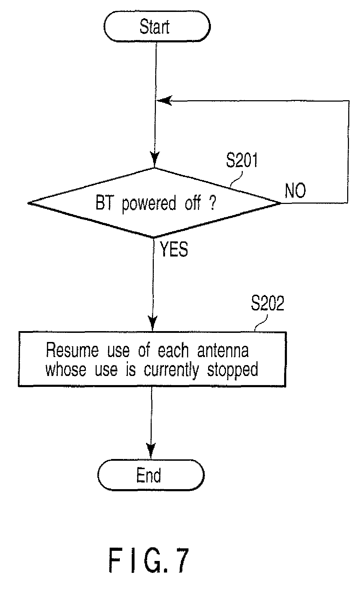

The processing of resuming the use of a wireless LAN antenna whose use is being stopped will be described next with reference to the flowchart of FIG. 7. This resumption processing is executed in response to the stopping of the operation of the Bluetooth module (BT) 120.

The baseband processing unit (MAC/Baseband) 201 monitors a Bluetooth Status signal to determine whether the Bluetooth module (BT) 120 is powered off (step S201). If the Bluetooth module (BT) 120 is powered off (YES in step S201), the baseband processing unit (MAC/Baseband) 201 resumes the use of all wireless LAN antennas whose use is being stopped (step S202). With this operation, the wireless LAN module 123 executes wireless communication by using all the wireless LAN antennas (the wireless LAN antennas 1, 2, and 3).

As described above, in the first example, the baseband processing unit (MAC/Baseband) 201 executes the processing of sequentially stopping the use of the wireless LAN antennas 1, 2, and 3 in ascending order of isolation level until signal interference is reduced to a predetermined level based on antenna control information 300. This makes it possible to efficiently reduce radio interference while maintaining the use of as many wireless LAN antennas as possible.

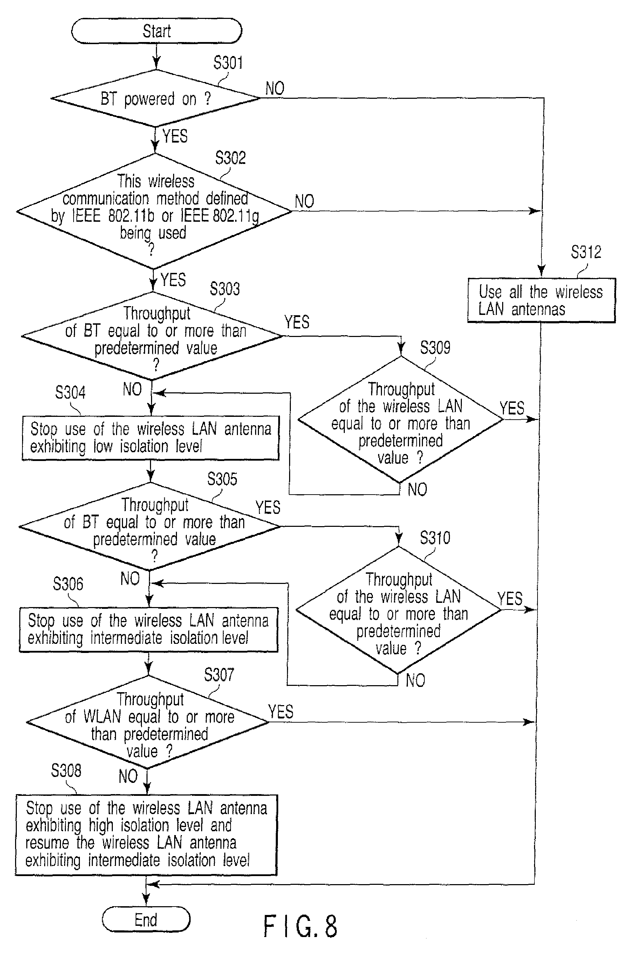

The second example of an antenna control processing sequence executed by the baseband processing unit (MAC/Baseband) 201 will be described next with reference to the flowchart of FIG. 8.

Assume that in this case, the wireless LAN module 123 has already been powered on, and the wireless LAN module 123 is executing wireless communication by using the wireless LAN antennas 1, 2, and 3.

First of all, the baseband processing unit (MAC/Baseband) 201 determines, by using a BT Status signal, whether or not the Bluetooth module (BT) 120 is powered on (step S301).

If the Bluetooth module (BT) 120 is in the OFF state, the baseband processing unit (MAC/Baseband) 201 continuously uses all the wireless LAN antennas (the wireless LAN antennas 1, 2, and 3) (step S312).

If the Bluetooth module (BT) 120 is powered on, i.e., both the Bluetooth module (BT) 120 and the wireless LAN module (WLAN) 123 are operating (YES in step S301), the baseband processing unit (MAC/Baseband) 201 determines whether or not the wireless communication scheme defined in IEEE 802.11b or IEEE 802.11g is currently used (step S302). If the wireless communication scheme used by the wireless LAN module (WLAN) 123 is that defined in IEEE 802.11a (NO in step S302), no radio interference occurs between the Bluetooth module (BT) 120 and the wireless LAN module (WLAN) 123. The baseband processing unit (MAC/Baseband) 201 therefore continuously uses all the wireless LAN antennas 1, 2, and 3 (step S312).

If the scheme defines in IEEE 802.11b or IEEE 802.11g is being used (YES in step S302), the baseband processing unit (MAC/Baseband) 201 detects the current throughput of wireless communication executed by the Bluetooth module (BT) 120 based on a throughput Status signal from the Bluetooth driver, in order to determine whether or not radio interference has occurred between the Bluetooth module (BT) 120 and the wireless LAN module (WLAN) 123 (step S303).

If the detected current throughput of the Bluetooth module (BT) 120 is lower than a predetermined value (NO in step S303), the baseband processing unit (MAC/Baseband) 201 starts antenna control processing. If the detected current throughput of the Bluetooth module (BT) 120 is equal to or more than the predetermined value (YES in step S303), the baseband processing unit (MAC/Baseband) 201 detects the current throughput of wireless communication executed by the wireless LAN module (WZAN) 123, and determines whether or not the detected throughput is equal to or more than a predetermined value (step S309). If the current throughput of the wireless LAN module (WLAN) 123 is lower than the predetermined value (NO in step S303), the baseband processing unit (MAC/Baseband) 201 starts antenna control processing. If the current throughput of the wireless LAN module 123 is equal to or more than the predetermined value, no antenna control processing is executed.

In antenna control processing, first of all, the baseband processing unit (MAC/Baseband) 201 stops the use of one of the wireless LAN antennas 1, 2, and 3 which exhibits the lowest isolation level of those between the wireless LAN antennas 1, 2, and 3 and the BT antenna 5 (step S304). In step S304, the baseband processing unit (MAC/Baseband) 201 refers to the antenna control information 300 and stops the use of the wireless LAN antenna (the wireless LAN antenna 3 in this case) of the antenna number designated by the data portion 311. With this operation, the currently used antennas are the two antennas 1 and 2. The wireless LAN module 123 executes wireless communication by using the two antennas 1 and 2.

The baseband processing unit (MAC/Baseband) 201 then detects the current throughputs of the Bluetooth module (BT) 120 and wireless LAN module 123 to determine whether or not the signal interference level between the wireless LAN module (WLAN) 123 and the Bluetooth module (BT) 120 is reduced to a predetermined level (steps S305 and S310). If each of the throughputs of the Bluetooth module (BT) 120 and wireless LAN module 123 is equal to or more than a predetermined value (YES in step S310), i.e., the signal interference level is reduced to the predetermined level, the baseband processing unit (MAC/Baseband) 201 terminates antenna control processing. Subsequently, the wireless LAN module 123 executes wireless communication by using the two antennas 1 and 2.

If one of the throughputs of the Bluetooth module (BT) 120 and wireless LAN module 123 is lower than the predetermined value (NO in step S305 or S310), i.e., the signal interference level, is not reduced to the predetermined level, the baseband processing unit (MAC/Baseband) 201 stops the use of one of the wireless LAN antennas 1, 2, and 3 which exhibits the second lowest isolation level of those between the wireless LAN antennas 1, 2, and 3 and the BT antenna 5 (step S306). In step S306, the baseband processing unit (MAC/Baseband) 201 refers to the antenna control information 300 and stops the use of the wireless LAN antenna (the wireless LAN antenna 2 in this case) of the antenna number designated by the data portion 312. With this operation, only the antenna 1 is currently used. The wireless LAN module 123 executes wireless communication by using only the antenna 1.

The baseband processing unit (MAC/Baseband) 201 detects the current throughput of the wireless LAN module (WLAN) 123 again (step S307). If the current throughput of the wireless LAN module (WLAN) 123 is equal to or more than a predetermined value (YES in step S307), the baseband processing unit (MAC/Baseband) 201 terminates the antenna control processing. Subsequently, the wireless LAN module (WLAN) 123 executes wireless communication by using only the antenna 1.

If the current throughput of the wireless LAN module (WZAN) 123 is lower than the predetermined value (NO in step S307), the baseband processing unit (MAC/Baseband) 201 determines that the wireless LAN antenna 1 exists near the null point of the electric field strength level. The baseband processing unit (MAC/Baseband) 201 then stops the use of the wireless LAN antenna 1, and resumes the use of the wireless LAN antenna exhibiting the second highest isolation level (step S308). Subsequently, the wireless LAN module 123 executes wireless communication by using only the wireless LAN antenna 2.

As described above, in the second example of an antenna control processing, the baseband processing unit (MAC/Baseband) 201 monitors not only the throughput of the wireless LAN module 123 but also the throughput of the Bluetooth module 120 to determine whether or not the signal interference level between the wireless LAN module 123 and the Bluetooth module 120 is reduced to a predetermined level. This makes it possible to determine a signal interference level more accurately.

Antenna control processing may also be executed under the condition that the throughput (effective communication speed) of wireless communication executed by the wireless LAN module 123 or the throughput (effective communication speed) of wireless communication executed by the Bluetooth module 120 decreases to a predetermined value.

In this embodiment, the throughputs (effective communication speeds) of wireless communication executed by the wireless LAN module 123 and Bluetooth module 120 are detected. However, error rates such as bit error rates (BERs) may be detected to determine a signal interference level in accordance with the detected error rates. Alternatively, an error rate such as a BER may be used as a condition for starting antenna control processing instead of a throughput.

This embodiment has exemplified the diversity system as a system using a plurality of antennas. For example, a plurality of antennas may be used as an adaptive array antenna. An adaptive array antenna also increases in performance as the number of antennas used increases.

## Claims

1. An information processing apparatus **characterized by** comprising:
an antenna (5) corresponding to a first wireless communication scheme;
a first wireless communication unit (120) which executes wireless communication by the first wireless communication scheme using the antenna (5) corresponding to the first wireless communication scheme;
a plurality of antennas (1, 2, 3) corresponding to a second wireless communication scheme;
a second wireless communication unit (123) which executes wireless communication by a second wireless communication scheme using the plurality of antennas (1, 2 ,3) corresponding to the second wireless communication scheme; and
means (201) for executing processing of stopping use of the plurality of antennas (1, 2, 3) corresponding to the second wireless communication scheme, when the first wireless communication unit (120) and the second wireless communication unit (123) are operating, in accordance with isolation levels between the antenna (5) corresponding to the first wireless communication scheme and the plurality of antennas (1, 2 ,3) corresponding to the second wireless communication scheme, in ascending order of the isolation level, until signal interference caused between wireless communication executed by the first wireless communication scheme and wireless communication executed by the second wireless communication scheme is reduced to a predetermined level.

2. The apparatus according to claim 1, **characterized in that** the executing means (201) includes:
means for determining whether or not signal interference caused between wireless communication executed by the first wireless communication scheme and wireless communication executed by the second wireless communication scheme is reduced to the predetermined level, when use of one of the plurality of antennas (1, 2, 3) corresponding to the second wireless communication scheme which exhibits a lowest isolation level of the isolation levels is stopped; and
means for stopping use of one of the plurality of antennas (1, 2, 3) corresponding to the second wireless communication scheme which exhibits a second lowest isolation level of the isolation levels, when the signal interference is not reduced to the predetermined level.

3. The apparatus according to claim 1, the executing means (201) includes:
means for detecting a throughput of wireless communication executed by the second wireless communication unit (123) using the plurality of antennas (1, 2, 3) corresponding to the second wireless communication scheme; and
means for stopping use of the plurality of antennas (1, 2, 3) corresponding to the second wireless communication scheme in ascending order of the isolation level, when the detected throughput is lower than a predetermined value.

4. The apparatus according to claim 1, **characterized in that** the executing means (201) includes:
means for detecting a throughput of wireless communication executed by the first wireless communication unit (120); and
means for stopping use of the plurality of antennas (1, 2, 3) corresponding to the second wireless communication scheme in ascending order of the isolation level, when the detected throughput is lower than a predetermined value.

5. The apparatus according to claim 1, **characterized in that** the executing means (201) includes:
means for detecting a throughput of wireless communication executed by the second wireless communication unit (123) using an antenna exhibiting a highest isolation level of the isolation levels, when use of all antennas other than an antenna exhibiting a highest isolation level of the isolation levels of the plurality of antennas (1, 2, 3) corresponding to the second wireless communication scheme is stopped; and
means for stopping use of an antenna exhibiting a highest isolation level of the isolation levels and resuming use of an antenna exhibiting a second highest isolation level of the isolation levels when the detected throughput is lower than a predetermined value.

6. The apparatus according to claim 1, **characterized in that** the executing means (201) includes means for resuming use of each antenna, of the plurality of antennas (1, 2, 3) corresponding to the second wireless communication scheme, whose use is stopped, when operation of the first wireless communication unit (120) is stopped.

7. An information processing apparatus **characterized by** comprising:
a housing (11, 12);
a first antenna (5) provided on the housing (11, 12);
a first wireless communication unit (120) which executes first wireless communication by using the first antenna (5);
a second antenna (1), a third antenna (2), and a fourth antenna (3) which are respectively provided at different positions on the housing (11, 12);
a second wireless communication unit (123) which executes second wireless communication by using the second antenna (1), third antenna (2), and fourth antenna (3);
means for stopping use of an antenna of the second antenna (1), the third antenna (2), and the fourth antenna (3) which exhibits a lowest isolation level of isolation levels between the first antenna (5) and the second antenna (1), the third antenna (2), and the fourth antenna (3), when the first wireless communication unit (120) and the second wireless communication unit (123) are operating, based on isolation levels between the first antenna (5) and the second antenna (1), the third antenna (2), and the fourth antenna (3);
means for determining whether or not signal interference caused between wireless communication executed by the first wireless communication scheme and wireless communication executed by the second wireless communication scheme is reduced to a predetermined level, when use of antenna exhibiting a lowest isolation level of the isolation levels is stopped; and
means for stopping use of an antenna of the second antenna (1), the third antenna (2), and the fourth antenna (3) which exhibits a second lowest isolation level of isolation levels between the first antenna (5) and the second antenna (1), the third antenna (2), and the fourth antenna (3), when the signal interference is not reduced to the predetermined level.

8. The apparatus according to claim 7, **characterized by** further comprising means for resuming use of each antenna, of the second antenna (1), the third antenna (2), and the fourth antenna (3), whose use is stopped, when operation of the first wireless communication unit (120) is stopped.

9. A communication control method of preventing signal interference caused between a first wireless communication unit (120) which executes wireless communication by a first wireless communication scheme using an antenna (5) corresponding to the first wireless communication scheme and a second wireless communication unit (123) which executes wireless communication by a second wireless communication scheme using a plurality of antennas (1, 2, 3) corresponding to the second wireless communication scheme, the method **characterized by** comprising:
first stopping (S104) use of an antenna of the plurality of antennas (1, 2, 3) corresponding to the second wireless communication scheme which exhibits a lowest isolation level of isolation levels between the plurality of antennas (1, 2, 3) corresponding to the second wireless communication scheme and the antenna (5) corresponding to the first wireless communication scheme, when the first wireless communication unit (120) and the second wireless communication unit (123) are operating, based on the isolation levels between the antenna (5) corresponding to the first wireless communication scheme and the plurality of antennas (1, 2, 3) corresponding to the second wireless communication scheme;
determining (S105) whether or not signal interference caused between wireless communication executed by the first wireless communication scheme and wireless communication executed by the second wireless communication scheme is reduced to a predetermined level, when use of an antenna which exhibits a lowest isolation level of the isolation levels is stopped; and
second stopping (S106) use of an antenna of the plurality of antennas (1, 2, 3) corresponding to the second wireless communication scheme which exhibits a second lowest isolation level of the isolation levels between the plurality of antennas (1, 2, 3) corresponding to the second wireless communication scheme and the antenna (5) corresponding to the first wireless communication scheme, when the signal interference is not reduced to the predetermined level.

10. The method according to claim 9, **characterized in that** the first stopping (S104) includes:
detecting (S309) a throughput of wireless communication executed by the second wireless communication unit (123) using the plurality of antennas (1, 2, 3) corresponding to the second wireless communication scheme; and
stopping (S304) use of the plurality of antennas (1, 2, 3) corresponding to the second wireless communication scheme in ascending order of the isolation level when the detected throughput is lower than a predetermined value.

11. The method according to claim 9, **characterized in that** the first stopping (S104) includes:
detecting (S303) a throughput of wireless communication executed by the first wireless communication unit (120); and
stopping (S304) use of the plurality of antennas (1, 2, 3) corresponding to the second wireless communication scheme in ascending order of the isolation level when the detected throughput is lower than the predetermined value.

12. The method according to claim 9, **characterized in that** the first stopping (S104) includes:
detecting (S107) a throughput of wireless communication executed by the second wireless communication unit (123) using an antenna exhibiting a highest isolation level of the isolation levels when use of all antennas other than the antenna of the plurality of antennas (1, 2, 3) corresponding to the second wireless communication scheme which exhibits the highest isolation level is stopped; and
stopping (S108) use of the antenna exhibiting the highest resuming use of the antenna exhibiting the highest isolation level and resuming use of an antenna exhibiting a second highest isolation level of the isolation levels when the detected throughput is lower than a predetermined value.

13. The method according to claim 9, **characterized by** further comprising resuming (S202) use of each antenna, that use has been stopped plurality of antennas (1, 2, 3) corresponding to the second wireless communication scheme, when operation of the first wireless communication unit (120) is stopped.
